(19) Europäisches Patentamt
European Patent Office
Office européen des brevets

(11) Publication number: **0 129 596**
**B1**

# (12) EUROPEAN PATENT SPECIFICATION

(45) Date of publication of patent specification: **21.01.87**

(21) Application number: **84900449.4**

(22) Date of filing: **20.12.83**

(86) International application number:
**PCT/US83/02000**

(87) International publication number:
**WO 84/02587 05.07.84 Gazette 84/16**

(51) Int. Cl.[4]: **G 03 C 1/82,** G 03 C 1/80, C 09 D 3/00, C 08 L 1/14

## (54) ELECTRICALLY CONDUCTIVE COATING COMPOSITION AND USE OF SAME.

(30) Priority: **27.12.82 US 453049**

(43) Date of publication of application:
**02.01.85 Bulletin 85/01**

(45) Publication of the grant of the patent:
**21.01.87 Bulletin 87/04**

(84) Designated Contracting States:
**BE DE FR GB**

(56) References cited:
**DE-A-2 532 916**
**US-A-1 981 425**

(73) Proprietor: **EASTMAN KODAK COMPANY**
**343 State Street**
**Rochester New York 14650 (US)**

(72) Inventor: **JONES, Raymond, T.**
**958 Garden Lane**
**Webster, NY 14580 (US)**
Inventor: **KELLY, James, E.**
**31 Barns Court**
**Rochester, NY 14612 (US)**
Inventor: **MOTT, Karen, L.**
**427 Bayside Drive**
**Webster, NY 14580 (US)**

(74) Representative: **Baron, Paul Alexander Clifford et al**
**Kodak Limited Patent Department**
**Headstone Drive**
**Harrow Middlesex HA1 4TY (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to coating compositions that are particularly useful in forming layers that are water-insoluble, conductive, and adhere well to a variety of other layers and substrates. It also relates to elements containing one or more such layers.

Hydrophobic substrates, such as polyester, cellulose ester, polyamide or polyolefin films and resin-coated paper supports, are well known commercial materials which possess a number of advantages for many uses. For example, in the photographic industry such substrates are used as photographic supports for radiation-sensitive elements. However, the use of such hydrophobic materials in the photographic and other arts has been hampered to some extent because of the difficulty of adhering various other layers to them, particularly when such other layers are hydrophilic in nature.

To improve the adhesion of various layers to hydrophobic supports, it is known to apply one or more intermediate layers to the supports before other layers are applied. These intermediate layers adhere well to the support and to the after applied layers. Such intermediate layers are known as substratum or simply "subbing" layers and can include a wide variety of natural or synthetic resinous materials or adhesion promotors.

Prior to applying hydrophilic layers such as radiation-sensitive layers to subbed hydrophobic supports, such supports are often in web form. In this form they are subjected to considerable mechanical handling over rollers and other web-guiding means. As a result, a buildup in electrostatic charge occurs on the support web. Because of the nature of the support material, little of this charge is dissipated prior to subsequent coating. Consequently, such electrostatic charge often interferes with subsequent coating operations and causes nonuniformities, streaks and other defects in the later applied coatings. Further, during the coating of radiation-sensitive materials, the electrostatic charge can arc or discharge to cause unwanted exposure or "fogging" of the radiation-sensitive layers. Fogging usually shows up as small white dots in any image provided in such layers.

Attempts have been made to prevent or reduce electrostatic charge buildup by using a conductive subbing layer. Unfortunately, known conductive layers generally exhibit only limited conductivity which reduces such buildup to an insufficient degree. Also such layers often exhibit inadequate adhesion to hydrophobic supports.

U.S.—A—1,981,425, issued November 20, 1934 describes the use of mixed cellulose esters having free acid groups, as exemplified by cellulose acetate succinate, in subbing layers to bring about better adhesion between a photographic emulsion layer which is hydrophilic and a photographic support that is hydrophobic. This patent teaches nothing with respect to the problem of preventing or reducing static charge buildup in photographic support webs. Furthermore, mixed cellulose esters containing free acid groups as described in U.S.—A—1,981,425 provide layers having inadequate conductivity to prevent a substantial buildup of static electrical charge. Moreover, as described in such patent, the mixed cellulose esters having free acid groups are coated from organic solvent solutions such as acetone solutions. Such organic solvents are costly, often flammable and require special equipment to prevent escape of solvent vapors into the environment.

U.S.—A—4,196,001, issued April 1, 1980, describes photographic elements comprising an antistatic layer formed from an aqueous coating composition containing a water-soluble film-forming polymeric anionic polyelectrolyte in free acid form, a water-soluble film-forming cross-linkable polymeric binder and an acid-acting cross-linking agent for the polymeric binder.

The problem of this invention is to provide an aqueous coating composition that can form on a support, a layer that is water-insoluble, electrically conductive and has excellent adhesion to the support. This problem is solved with an aqueous coating composition that comprises a combination of:

(a) a hydrophilic binder,

(b) a conductivity agent that is a water-soluble salt of a polycarboxylic acid ester of cellulose having at least 8 acyl groups per $C_{24}$ cellulose unit wherein at least a majority of said acyl groups are aliphatic polycarboxylic acid acyl groups having 3 to 6 carbon atoms, and

(c) a hardening agent in an amount sufficient to render said composition water-insoluble upon coating and drying thereof.

This invention also provides an element comprising a support having thereon a layer that is water-insoluble, electrically conductive and adherent. Such layer comprises a dried composition having the combination of components (a)-(c) described previously.

Further, this invention provides an element comprising a photographic support having thereon a hydrophilic layer that is adhered to said support with a water-insoluble, electrically conductive subbing layer. Such subbing layer comprises a dried composition having the combination of components (a)-(c) described previously.

In addition, this invention provides an element comprising a photographic support, a radiation-sensitive layer on at least one side of the support and a water-insoluble, conductive and adherent layer adjacent the support on at least one side thereof. Such layer adjacent the support comprises a composition having the combination of components (a)-(c) described previously.

This invention also provides for the use of the combination of components (a)-(c) in the aforementioned elements.

The coating compositions of this invention do not require the use of organic solvents in coating operations. Accordingly, they avoid the disadvantages described previously which occur with coating compositions requiring such organic solvents. Also, the coating compositions of this invention provide conductive layers which are very effective to reduce or eliminate electrostatic charge buildup that can occur during manufacturing operations, as described hereinbefore. Furthermore, water-insoluble layers coated from the compositions of this invention exhibit excellent adhesion to hydrophobic supports such as photographic supports and layers such as hydrophilic layers that are subsequently coated over such layers. The compositions of this invention can be used to provide water-insoluble, conductive layers that are effective anti-curl layers. Such layers are typically coated on the side of a photographic support that is opposite to the side of the support which bears a hydrophilic layer such as a photographic emulsion layer. They are often referred to as pelloid or backing layers.

The coating composition of this invention is an aqeous composition. Typically, water is the only solvent used in the composition. This avoids the disadvantages inherent in the use of organic solvents, as previously discussed herein. However, if desired, mixtures of water and water-miscible organic solvents (e.g. alcohols such as methanol and isopropanol, and ketones such as acetone) can be used as long as water comprises at least 50 percent, by weight, of the composition.

The first essential component of the coating composition of this invention is one or more hydrophilic binders. Typically, such binders are film-forming and water-soluble. They are either commercially available or readily prepared using methods known to workers skilled in the art. Suitable hydrophilic binders include both naturally occurring substances such as proteins and protein derivatives, cellulose derivatives (e.g. cellulose esters and cellulose nitrate), gelatin and gelatin derivatives, polysaccharides, collagen derivatives; and synthetic hydrophilic polymeric materials such as poly(vinyl alcohol), and poly(vinyl acetate). Other examples of useful hydrophilic binders are known in the art as described, for example, in *Research Disclosure,* publication 17643, December, 1978, p. 26, paragraph IX (published by Industrial Opportunities, Ltd., Homewell, Havant Hampshire PO9 1EF United Kingdom).

The second essential component of the coating composition of this invention is one or more of the water-soluble salts of the polycarboxylic acid esters of cellulose previously referred to herein. These esters have at least 8 acyl groups per $C_{24}$ cellulose unit wherein at least a majority of the acyl groups are derived from an aliphatic polycarboxylic acid having from 3 to 6 carbon atoms. Esters useful in the practice of this invention can be represented by the following formula of $C_{24}$ cellulose unit:

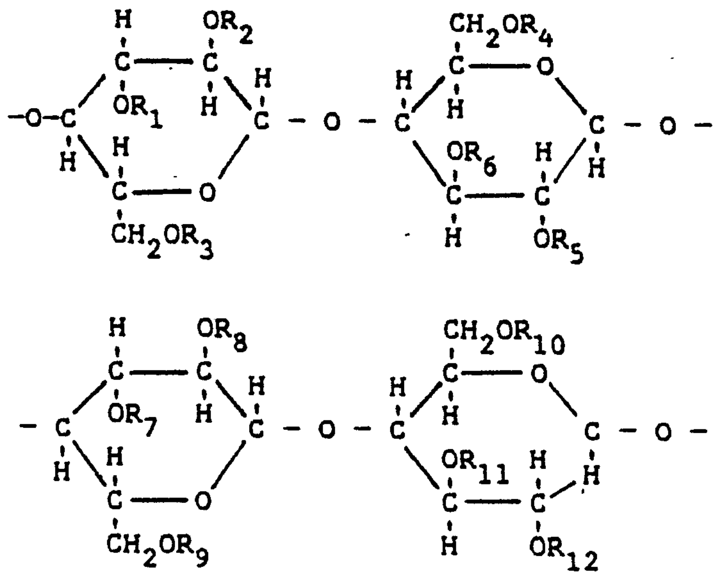

wherein each of $R_1$—$R_{12}$ is independently hydrogen or an acyl group. These acyl groups are organic radicals derived from an organic acid by removal of a hydroxyl group. At least 8, and preferably, at least 10 of $R_1$—$R_{12}$ are acyl groups. Of these acyl groups, at least a majority (i.e. greater than 50 percent) are acyl groups of one or more of the aliphatic polycarboxylic acids having 3 to 6 carbon atoms. Preferably at least two-thirds, and most preferably all of the acyl groups are polycarboxylic acid acyl groups.

The salts of the cellulose esters useful in practicing this invention are either commercially available, or readily prepared by a skilled worker in the art. One method of preparation includes reacting cellulose with one or more organic acids including the polycarboxylic acids (or their functional equivalents such as halides or anhydrides) having 3 to 6 carbon atoms in the presence of an organic base, such as pyridine or quinoline. The reaction product is then washed with dilute acid to remove substantially all of the base and to give a polycarboxylic acid ester of cellulose in which each of the polycarboxylic acid acyl groups provides at least one free unesterified carboxylic group. The acid ester can then be treated with a suitable hydroxide (e.g. ammonium hydroxide or an alkali metal hydroxide) to provide a water-soluble salt of the cellulose ester. Cellulose carboxylic acid esters such as cellulose acetate can be used as the starting

material in the reaction to provide a salt of a mixed cellulose ester such as potassium acetate succinate as long as the salt contains the required minimum number of polycarboxylic acid acyl groups per $C_{24}$ cellulose unit.

Useful polycarboxylic acids (or their functional equivalents such as acid halides or anhydrides) for preparing the described water-soluble salts of cellulose esters include both aliphatic saturated and aliphatic unsaturated polycarboxylic acids having at least two carboxyl groups. Aliphatic saturated acids having only two carboxyl groups (i.e. dicarboxylic acids) are preferred. Examples of the useful acyclic polycarboxylic acids include malonic acid, succinic acid, glutaric acid, fumaric acid, glutaconic acid, 2-methylsuccinic acid, adipic acid, 1,2,3-propanetricarboxylic acid, citric acid and tartaric acid. Preferred acids are dicarboxylic acids such as succinic acid, malonic acid and glutaric acid.

Mixtures of the aforementioned salts can be used in the coating compositions of this invention. Typical salts include the ammonium or alkali metal (e.g. lithium, sodium or potassium) salts. As previously indicated herein, the salts employed in practicing this invention are water-soluble. Typically, they dissolve in water at temperatures of about 20°C to form substantially clear, easily coatable compositions. For certain salts moderate heating of the composition above 20°C accelerates solubility.

After coating a conductive layer in an element, the layer is rendered water-insoluble. This can be done in various ways, e.g., (1) by including a hardening agent in the aqueous coating composition in an amount sufficient to render the composition water-insoluble after coating and drying of the coated composition; or (2) by incorporating at any appropriate place in the element a diffusible hardening agent which is capable of rendering the composition water-insoluble. For example, a diffusible hardening agent can be incorporated in a hydrophilic coating composition which is coated in association with the coated conductive layer. Such an associated layer is a layer which is contiguous to the conductive layer or it is a layer which has intervening layers therebetween through which the diffusible hardening agent can diffuse to reach the conductive layer. Preferably, when a diffusible hardening agent is used in the practice of this invention, it is incorporated in a layer contiguous to the conductive layer so that diffusion of the hardening agent is expedited.

Useful hardening agents, both diffusible and nondiffusible, are well known to an ordinary worker in the photographic art. Many of them are commercially available. Others can be readily prepared. They can be used alone or in mixtures, and in a free or blocked form. Typical useful hardeners include Werner chromium complex compounds, chromium halides and sulfates, aldehydes, epoxy-containing compounds, haloethylsulfonyls, bis(vinylsulfonyl)s, zirconium nitrate and others described, for example, in *Research Disclosure,* publication 17643, paragraph X, noted hereinbefore. Preferred hardeners for use in this invention include diepoxides, such as butanediol diglycidyl ether.

The proportions of the essential components of the coating compositions of this invention can be varied widely to meet specific requirements for conductivity, adhesion and water-insolubility. Typically, the hydrophilic binder in the aqueous coating composition is present in an amount in the range of from 20 to 50, preferably from 20 to 35 percent, based on total dry composition weight. Further, the cellulose ester salt is generally present in an amount in the range of from 50 to 80, preferably from 65 to 80 percent, based on total dry composition weight. The hardening agent is present in an amount sufficient to render the composition water-insoluble after coating and drying. Typically the hardening agent is present in the aqueous coating composition in an amount in the range of from 10 to 30, preferably from 15 to 20 percent, based on total dry composition weight. When a diffusible hardening agent is incorporated in another location in an element, additional amounts may be needed so that a sufficient amount diffuses to the coated conductive layer to render it water-insoluble.

The coating compositions of this invention can include additional nonessential ingredients in amounts which are typically used in the art. For example, they can contain matting agents (e.g. silica, starch, titanium dioxide, polymeric beads, zinc oxide and calcium carbonate), coating aids (e.g. alcohols and surfactants), biocides, wetting aids, dyes, defoamers, thickeners, colorants, and other addenda commonly employed in such compositions.

Typically, the percentage of solids in the aqueous coating compositions of this invention is in the range of from 0.5 to 15 percent based on total wet composition weight. The specific percentage used depends upon the intended use of the coating composition. For example, if it is used to provide a conductive subbing layer, the percent solids typically ranges from 0.5 to 2.5 percent. If the intended use is as pelloid or backing layer, the percent solids typically ranges from 5 to 15 percent.

The coating compositions of this invention can be applied to a suitable photographic support to form a conductive layer in the preparation of an element. Typical photographic supports include subbed or unsubbed polymeric films, wood fiber or cellulosic substances such as paper, metallic sheets and foil, glass and ceramic substances. Typical useful cellulosic supports are paper supports having baryta or resin (e.g. polyolefin) coatings thereon.

Preferably, the support is hydrophobic such as a resin-coated paper or a polymeric film. Such hydrophobic supports have a high or strong tendency to repel water. Their hydrophobicity can be conveniently determined by measuring the receding water contact angle, $\theta_R$, established between a droplet of distilled water and the surface of the support. Methods for determining $\theta_R$ are well known. A suitable method is the Sessile drop method described in *Physical Chemistry of Surfaces,* by A. W. Adamson (published by Interscience Publishing Corp., 1967, pp. 352—375). Although it can be lower, typically, the $\theta_R$

for hydrophobic photographic supports used in the practice of this invention, as determined by the Sessile drop method, is greater than 75°, and preferably greater than 90°. Typical useful polymeric film supports include cellulose nitrate; cellulose esters (e.g. cellulose triacetate); polyamides; polymers prepared from vinyl chloride; polyolefins (e.g. polyethylene or polystyrene); polycarbonates; polyacrylates; polysulfones; polyamides and polyesters of dibasicc aromatic carboxylic acids with divalent alcohols. A particularly useful polymeric support is a poly(ethylene terephthalate) film. A detailed description of useful photographic supports and methods of making same is provided in *Research Disclosure,* publication 17643, paragraph XVII, cited previously herein and the references mentioned therein.

The aqueous coating composition of this invention can be applied to one or both sides of the support, but preferably to only one side, to form an electrically conductive layer. The composition can be applied or located on the support by any of a number of suitable procedures, including immersion or dip coating, roller coating, reverse roll coating, air knife coating, doctor blade coating, gravure coating, spray coating, extrusion coating, bead coating, stretch-flow coating and curtain coating. The composition can be applied alone or as one of several layers applied with multilayer coating techniques. Applied layers can be dried by any suitable evaporation technique. Descriptions of coating and drying techniques are given in *Research Disclosure,* publication 17643, paragraph XV, cited hereinabove and the references mentioned therein. The thickness of the coated conductive layer will depend upon the particular requirements of the coated element and is well within the skill of an ordinary worker in the photographic coating art. The conductive layer can be formed with one or more coating passes to obtain desired coverages. Drying of the coated layer(s) can be carried out over a wide range of temperatures as is known in the art.

A coated and dried conductive layer prepared according to this invention typically has a surface resistivity of less than about $10^9$ ohms per square, and preferably from about $10^7$ to about $10^8$ ohms per square, all measured at 21°C and 50% relative humidity. This resistivity can be measured by any suitable technique. One such technique is described in ASTM Standard C59.3, designation D257—75 entitled "Standard Methods of Test for D—C Resistance or Conductance of Insulating Materials," pp. 66—85, published February 29, 1975. U.S.—A—3,525,621 (issued August 25, 1970 to Miller) also discusses measurement of surface resistivities of coated layers.

The coated elements containing a conductive layer or layers formed according to this invention can be used for any number of products which require a substrate having one or more conductive layers thereon. One such use is for preparing composite elements which carry one or more additional layers which normally may not adhere adequately to hydrophobic supports. Typically, such additional layers are hydrophilic in nature, i.e., layers that have a strong tendency to attract water. As with the hydrophobic supports described hereinabove, the hydrophilicity of such layers can be determined by measuring the $\theta_R$ by the Sessile drop method. Typical of such hydrophilic layers are subbing layers, antihalation layers, antistatic layers, matting layers, reflective layers, timing layers, neutralizing layers and protective layers that are commonly used in the photographic art. Such hydrophilic layers also include hydrophilic image-forming and image-bearing layers useful in the printing, electrographic (e.g. electrophotographic), photographic and other imaging arts. The hydrophilic layers typically contain one or more hydrophilic binders which can be the same or different from that which is used in the aqueous coating compositions of this invention. Preferably, such hydrophilic binders are the same and most preferably, both are gelatin.

The elements prepared as described herein are useful as image-forming elements which typically comprise one or more image-forming layers containing components capable of providing an image under certain conditions, e.g. in response to electromagnetic radiation, heat, electricity or chemical treatment. Typical image-forming components are described, for example, in *Research Disclosure,* publications 10938 (May, 1973); 15162 (November, 1976); 17029 (June, 1978); and 17643 (December, 1978). The elements are also useful as image-receiving elements which comprise one or more image-receiving layers containing components capable of "receiving" an image. Such elements can be used as receivers in, for example, integral image transfer film units or two-sheet instant film products, including those sometimes called "peel apart" products and those described in U.S.—A—4,296,195 (issued October 20, 1981 to Bishop et al) and 4,297,432 (issued October 27, 1981 to Bowman et al). They can also be photoconductive elements designed to receive toned images.

Preferred elements prepared using the composition of this invention are radiation-sensitive elements comprising suitable supports such as resin-coated paper or polyester film. To this support, one or more radiation-sensitive layers are adhered with a conductive subbing layer composed of the hydrophilic binder, cellulose ester salt and hardener described herein. Preferably, the hardening agent is in the aqueous coating composition which is applied and dried, but if diffusible, it can be incorporated in another appropriate place in the element. Such radiation-sensitive elements include elements intended for use in both black-and-white and color photography, such as photothermographic, photographic, thermographic and radiographic elements and diffusion or image transfer film units. Examples of photographic elements include photographic papers, aerial films, micrographic films and graphic arts films. The characteristics, components and methods of making such elements are known in the art. One reference summarizing much of the art is *Research Disclosure,* publication 17643, cited previously herein.

The aqueous coating composition of this invention can also be coated on a support and dried as a conductive pelloid or backing layer. This pelloid layer provides both antistatic and anti-curl characteristics to the resulting element. It is located on the side of the support opposite the side on which image-forming

or image-receiving layers are applied. Such conductive pelloid layers typically contain a matting agent such as silica and can be coated over one or more intervening layers.

The radiation-sensitive layers useful in the radiation-sensitive elements described herein can contain any suitable radiation-sensitive material. Preferably, they are photographic emulsion layers which contain one or more photographic silver halides. Such materials include, for example, silver chloride, silver bromide, silver bromoiodide, silver chlorobromide, silver chloroiodide, silver chlorobromoiodide, and mixtures thereof. Typically, these photographic emulsion layers also contain one or more hydrophilic binders. Illustrative binders are proteins such as gelatin, protein derivatives, cellulose derivatives, polysaccharides such as starch, sugars such as dextran, plant gums, and synthetic polymers such as polyvinyl alcohol, polyacrylamide and polyvinylpyrrolidone. Conventional addenda such as antifoggants, stabilizers, sensitizers, development modifiers, developing agents, hardeners, plasticizers and coating aids can also be included in the radiation-sensitive layers. In addition to the conductive and radiation-sensitive layers, the elements can include other appropriate subbing, pelloid, protective, adhesive, filter, reflective, opacifying, antistatic, intermediate and other layers commonly incorporated in radiation-sensitive products.

Hydrophilic layers such as radiation-sensitive layers, and other optional layers can be applied to a desired substrate in any suitable manner, including those well known techniques described herein for applying the aqueous coating compositions of this invention. The hydrophilic layers can be bonded directly to the support with the described conductive layer, or if desired, there can be one or more intervening layers either between the support and the conductive layer, or between the conductive layer and the hydrophilic layer. Preferably, the hydrophilic layer is bonded directly to the support with the conductive layer.

The following examples further illustrate the practice of this invention.

Example 1

An aqueous coating composition was prepared with the following components:

| | Weight percent |
|---|---|
| potassium cellulose succinate containing 10 succinyl groups per $C_{24}$ cellulose unit (62 mole percent succinyl groups) | 0.6 |
| gelatin | 0.15 |
| coating aid | 0.01 |
| biocide | 0.02 |
| polymeric bead matte agent | 0.02 |
| butanediol diglycidyl ether hardening agent | 0.15 |
| distilled water | 99.05 |
| | 100.0 |

This coating composition was coated on a poly(ethylene terephthalate) film support and dried to provide a water-insoluble, conductive and highly adherent layer. The dry coverage was about 0.05—0.1 g solids per square meter.

The surface resistivity of the conductive layer was measured using the technique described in ASTM Standard C59.3 noted hereinbefore. The layer was highly conductive as shown by its resistivity which was only about $10^7$ ohms per square at 21°C and 50% relative humidity.

The conductive layer exhibits excellent adhesion to the poly(ethylene terephthalate) film support. This adhesion is conveniently determined using a cross-hatch adhesion test. In this test the coated layer (or layers) is scored to the support with a razor blade in a cross-hatch pattern. Transparent adhesive tape is firmly applied to the surface of the coating and then ripped away. When the element prepared as described in this Example 1 is subjected to this test, no significant portion of the coated layer is removed by the tape. Also, during the preparation of the coated element, it was observed that the conductive layer significantly reduced electrostatic charge buildup.

The conductive layer was then overcoated with a photographic silver bromoiodide emulsion. The emulsion coated uniformly and was substantially free of the streaks and other coating defects normally associated with electrostatic charge buildup. Also, the emulsion coating exhibits excellent adhesion when it is subjected to the cross-hatch test previously described in this Example.

Substantially the same results can be obtained when the potassium cellulose succinate is replaced with the corresponding sodium or ammonium salts. Also, substitution of the potassium cellulose succinate with water-soluble salts such as ammonium or sodium salts of cellulose acetate succinate, cellulose malonate an cellulose glutarate containing at least 10 dicarboxylic acid acyl groups per $C_{24}$ cellulose unit provides layers having comparable low resistivity combined with good adhesion.

Example 2

As previously indicated herein, the compositions of this invention can be used to provide pelloid layers. To illustrate, the following composition was coated on one side of a poly(ethylene terephthalate) support coated on the other side with a photographic silver halide emulsion layer to provide a water-insoluble, conductive pelloid layer:

| | Weight percent |
|---|---|
| potassium cellulose succinate containing 10 succinyl groups per $C_{24}$ cellulose unit (62 mole percent succinyl groups) | 3.3 |
| gelatin | 7.7 |
| silica | 0.07 |
| bis(vinylsulfone)methyl hardening agent | 0.13 |
| distilled water | 88.8 |
| | 100.0 |

The resulting pelloid layer had a surface resistivity of about $10^8$ ohms per square at 21°C and 50% relative humidity, measured by the procedure described in Example 1. Also, the pelloid layer exhibited excellent adhesion when subjected to the cross-hatch test described in Example 1.

Comparative Example 1

As previously indicated herein, the water-soluble salt of the polycarboxylic acid ester of cellulose used in this invention contains at least 8 acyl groups per $C_{24}$ cellulose unit wherein a majority of these acyl groups are aliphatic polycarboxylic acid acyl groups having 3 to 6 carbon atoms. This comparative example illustrates the inferior conductive nature of coated layers formed using cellulose ester salts which fail to meet these criteria. To illustrate, several coatings were prepared. Controls A—D were the same as the coating composition described in Example 1 with the only difference being that a different cellulose ester salt was used. Control E was the same as the composition of Example 1 except that no cellulose ester salt was used.

| | |
|---|---|
| Control A | potassium cellulose acetate succinate containing 6 acetyl and 4 succinyl groups per $C_{24}$ cellulose unit (31 mole% succinyl groups) |
| Control B | potassium cellulose acetate succinate containing 6.4 acetyl and 2.4 succinyl groups per $C_{24}$ cellulose unit (21 mole% succinyl groups) |
| Control C | potassium cellulose acetate succinate containing 7.2 acetyl and 1.2 succinyl groups per $C_{24}$ cellulose unit (13 mole% succinyl groups) |
| Control D | cellulose acetate hexahydrophthalate containing 6.4 acetyl and 2.4 hexahydrophthalyl groups per $C_{24}$ cellulose unit (30 mole% hexahydrophthalyl groups) |

Each coating composition was coated and dried on a poly(ethylene terephthalate) film support at a 108 mg/m$^2$ dry coverage. The surface resistivity of each layer was measured as in Example 1 at 21°C and 50% relative humidity by the procedure described in ASTM Standard C59.3.

The resulting resistivities in ohms/sq. were:

| | |
|---|---|
| Control A | $230 \times 10^9$ |
| Control B | $109 \times 10^9$ |
| Control C | $179 \times 10^9$ |
| Control D | $359 \times 10^9$ |
| Control E | $152 \times 10^9$ |
| Coating composition of Example 1 | $0.4 \times 10^9$ |

It is apparent that the layer formed from the coating composition of this invention (Example 1) provides significantly lower resistivity, i.e. greater conductivity ($0.4 \times 10^9$ ohms/sq.) in comparison with coating compositions A—E.

**Claims**

1. An aqueous coating composition that is particularly useful for forming on a support a layer that is water-insoluble, electrically-conductive and adherent, said composition comprising a hydrophilic binder, a conductivity agent, and a hardening agent in a sufficient amount to render said composition water-insoluble upon coating and drying thereof, characterized in that said conductivity agent is a water-soluble salt of a polycarboxylic acid ester of cellulose having at least 8 acyl groups per $C_{24}$ cellulose unit wherein at least a majority of said acyl groups are aliphatic polycarboxylic acid acyl groups having 3 to 6 carbon atoms.

2. The coating composition of claim 1, wherein the polycarboxylic acid ester of cellulose contains at least 10 acyl groups per $C_{24}$ cellulose unit.

3. The coating composition of either of claims 1 or 2, wherein the salt is an alkali metal salt.

4. The coating composition of any of claims 1—3, wherein the polycarboxylic acid acyl groups are dicarboxylic acid acyl groups.

5. The coating composition of any of claims 1—4, wherein the hydrophilic binder is gelatin, the polycarboxylic acid acyl groups are succinyl groups and the hardening agent is butanediol diglycidyl ether.

6. An element comprising a support having thereon a layer that is water-insoluble, electrically-conductive and adherent, characterized in that the layer comprises a dried composition of any of claims 1—5.

7. The element of claim 6 wherein the support is a photographic film support.

8. An element comprising a photographic support having thereon a hydrophilic layer that is adhered to said support with a water-insoluble, electrically-conductive subbing layer, characterized in that the subbing layer comprises a dried composition of any of claims 1—5.

9. An element comprising a photographic support, a radiation-sensitive layer on at least one side of said support and a water-insoluble, electrically-conductive and adherent layer adjacent said support on at least one side thereof, characterized in that the layer adjacent said support comprises a dried composition of any of claims 1—5.

10. An element comprising a support having thereon a layer that is water-insoluble, electrically-conductive and adherent, said layer comprising a hydrophilic binder, a conductivity agent, and a hardening agent for the hydrophilic binder, characterized in that said conductivity agent is a water-soluble salt of a polycarboxylic acid ester of cellulose having at least 8 acyl groups per $C_{24}$ cellulose unit wherein at least a majority of said acyl groups are aliphatic polycarboxylic acid acyl groups having 3 to 6 carbon atoms.

11. An element comprising a photographic support having thereon a hydrophilic layer that is adhered to said support with a water-insoluble, electrically-conductive subbing layer, said subbing layer comprising a hydrophilic binder, a conductivity agent, and a hardening agent for the hydrophilic binder, characterized in that said conductivity agent is a water-soluble salt of a polycarboxylic acid ester of cellulose having at least 8 acyl groups per $C_{24}$ cellulose unit wherein at least a majority of said acyl groups are aliphatic polycarboxylic acid acyl groups having 3 to 6 carbon atoms.

12. An element comprising a photographic support, a radiation-sensitive layer on at least one side of said support and a water-insoluble electrically-conductive and adherent layer adjacent said support on at least one side thereof, said layer adjacent said support comprising a hydrophilic binder, a conductivity agent, and a hardening agent for the hydrophilic binder characterized in that said conductivity agent is a water-soluble salt of a polycarboxylic acid ester of cellulose having at least 8 acyl groups per $C_{24}$ cellulose unit wherein at least a majority of said acyl groups are aliphatic polycarboxylic acid acyl groups having 3 to 6 carbon atoms.

13. The use of the combination of

(a) a hydrophilic binder,

(b) a water-soluble salt of a polycarboxylic acid ester of cellulose having at least 8 acyl groups per $C_{24}$

cellulose unit wherein at least a majority of said acyl groups are aliphatic polycarboxylic acid acyl groups having 3 to 6 carbon atoms, and

(c) a hardening agent for the hydrophilic binder,

in an element of any of claims 6—12.

**Patentansprüche**

1. Wäßrige Beschichtungsmasse, die sich insbesondere zur Erzeugung einer Schicht auf einem Träger eignet, die wasserunlöslich, elektrisch leitfähig und haftend ist und die ein hydrophiles Bindemittel, ein Leitfähigkeitsmittel und ein Härtungsmittel in einer ausreichenden Menge enthält, um die Masse nach der Beschichtung und Trocknung wasserunlöslich zu machen, dadurch gekennzeichnet, daß das Leitfähigkeitsmittel ein wasserlösliches Salz eines Polycarbonsäureesters der Cellulose mit mindestens 8 Acylgruppen pro $C_{24}$-Celluloseeinheit, wobei mindestens eine Mehrheit der Acylgruppen aus aliphatischen Polycarbonsäureacylgruppen mit 3 bis 6 Kohlenstoffatomen besteht, ist.

2. Beschichtungsmasse nach Anspruch 1, dadurch gekennzeichnet, daß der Polycarbonsäureester der Cellulose mindestens 10 Acylgruppen pro $C_{24}$-Celluloseeinheit enthält.

3. Beschichtungsmasse nach Ansprüchen 1 oder 2, dadurch gekennzeichnet, daß das Salz ein Alkalimetallsalz ist.

4. Beschichtungsmasse nach einem der Ansprüche 1 bis 3, dadurch gekennzeichnet, daß die Polycarbonsäureacylgruppen Dicarbonsäureacylgruppen sind.

5. Beschichtungsmasse nach einem der Ansprüche 1 bis 4, dadurch gekennzeichnet, daß das hydrophile Bindemittel aus Gelatine besteht, daß die Polycarbonsäureacylgruppen Succinylgruppen sind und daß das Härtungsmittel aus Butandioldiglycidylether besteht.

6. Element mit einem Träger und einer hierauf aufgetragenen Schicht, die wasserunlöslich, elektrisch leitfähig und haftend ist, dadurch gekennzeichnet, daß die Schicht aus einer getrockneten Masse nach einem der Ansprüche 1 bis 5 besteht.

7. Element nach Anspruch 6, dadurch gekennzeichnet, daß der Träger ein photographischer Filmschichtträger ist.

8. Element mit einem photographischen Filmschichtträger und einer hydrophilen Schicht, die auf dem Schichtträger mit einer wasserunlöslichen, elektrisch leitfähigen Haftschicht haftet, dadurch gekennzeichnet, daß die Haftschicht aus einer getrockneten Masse nach einem der Ansprüche 1 bis 5 besteht.

9. Element mit einem photographischen Schichtträger, einer strahlungsempfindlichen Schicht auf mindestens einer Seite des Schichtträgers und einer wasserunlöslichen, elektrisch leitfähigen und haftenden Schicht benachbart zum Schichtträger auf mindestens einer Seite desselben, dadurch gekennzeichnet, daß die dem Schichtträger benachbarte Schicht aus einer getrockneten Masse nach einem der Ansprüche 1 bis 5 besteht.

10. Element mit einem Schichtträger, auf den eine Schicht aufgetragen ist, die wasserunlöslich, elektrisch leitfähig und haftend ist und ein hydrophiles Bindemittel, ein Leitfähigkeitsmittel und ein Härtungsmittel für das hydrophile Bindemittel enthält, dadurch gekennzeichnet, daß es als Leitfähigkeitsmittel ein wasserlösliches Salz eines Polycarbonsäureesters der Cellulose mit mindestens 8 Acylgruppen pro $C_{24}$-Celluloseeinheit, wobei mindestens eine Mehrheit der Acylgruppen aliphatische Polycarbonsäureacylgruppen mit 3 bis 6 Kohlenstoffatomen sind, enthält.

11. Element mit einem photographischen Schichtträger mit einer hierauf aufgetragenen hydrophilen Schicht, die auf dem Schichtträger mit einer wasserunlöslichen, elektrisch leitfähigen Haftschicht haftet, die ein hydrophiles Bindemittel, ein Leitfähigkeitsmittel und ein Härtungsmittel für das hydrophile Bindemittel enthält, dadurch gekennzeichnet, daß es als Leitfähigkeitsmittel ein wasserlösliches Salz eines Polycarbonsäureesters der Cellulose mit mindestens 8 Acylgruppen pro $C_{24}$-Celluloseeinheit, wobei mindestens eine Mehrheit der Acylgruppen aus aliphatischen Polycarbonsäureacylgruppen mit 3 bis 6 Kohlenstoffatomen besteht, enthält.

12. Element mit einem photographischen Schichtträger, einer strahlungsempfindlichen Schicht auf mindestens einer Seite des Schichtträgers und einer wasserunlöslichen, elektrisch leitfähigen und haftenden Schicht benachbart zu mindestens einer Seite des Schichtträgers, wobei die dem Schichtträger benachbarte Schicht ein hydrophiles Bindemittel, ein Leitfähigkeitsmittel und ein Härtungsmittel für das hydrophile Bindemittel enthält, dadurch gekennzeichnet, daß es als Leitfähigkeitsmittel ein wasserlösliches Salz eines Polycarbonsäureesters der Cellulose mit mindestens 8 Acylgruppen pro $C_{24}$-Celluloseeinheit, wobei mindestens eine Mehrheit der Acylgruppen aliphatische Polycarbonsäureacylgruppen mit 3 bis 6 Kohlenstoffatomen sind, enthält.

13. Verwendung einer Kombination aus

(a) einem hydrophilen Bindemittel,

(b) einem wasserlöslichen Salz eines Polycarbonsäureesters der Cellulose mit mindestens 8 Acylgruppen pro $C_{24}$-Celluloseeinheit, wobei mindestens eine Mehrheit der Acylgruppen aliphatische Polycarbonsäureacylgruppen mit 3 bis 6 Kohlenstoffatomen sind, und

(c) einem Härtungsmittel für das hydrophile Bindemittel,

in einem Element nach einem der Ansprüche 6 bis 12.

**Revendications**

1. Composition aqueuse d'enduction particulièrement utile pour former sur un support une couche insoluble dans l'eau, conductrice de l'électricité et adhérente, cette composition comprenant un liant hydrophile, un agent de conducitivité et un tannant en quantité suffisante pour rendre la composition insoluble dans l'eau après enduction et tannage, caractérisée en ce que l'agent de conductivité est un sel soluble dans l'eau d'un ester de cellulose et d'un acide polycarboxylique ayant au moins 8 groupes acyle par motif cellulose en $C_{24}$, au moins une majorité de ces groupes acyle étant des groupes acyle d'acide polycarboxylique aliphatique avec de 3 à 6 atomes de carbone.

2. Composition d'enduction de la revendication 1, dans laquelle l'ester de cellulose et d'acide polycarboxylique contient au moins 10 groupes acyle par motif de cellulose en $C_{24}$.

3. Composition d'enduction de l'une des revendications 1 ou 2, dans laquelle le sel est un sel de métal alcalin.

4. Composition d'enduction de l'une des revendications 1—3, dans laquelle les groupes acyle d'acide polycarboxylique sont des groupes acyle d'acide dicarboxylique.

5. Composition d'enduction de l'une des revendications 1—4, dans laquelle le liant hydrophile est la gélatine, les groupes acyle d'acide polycarboxylique sont des groupe succinyle, et le tannant est le diglycidyl ether du butanediol.

6..Produit comprenant un support avec une couche insoluble dans l'eau, conductrice de l'électricité et adhérente, caractérisée en ce que la couche comprend une composition séchée conforme à l'une des revendications 1—5.

7. Produit de la revendication 6, dans lequel le support est un support de film photographique.

8. Produit comprenant un support photographique avec, sur ce support, une couche hydrophile adhérant sur ce support par le moyen d'une sous-couche insoluble dans l'eau, conductrice de l'électricité, caractérisé en ce que la sous-couche comprend une composition séchée conforme à l'une des revendications 1—5.

9. Produit comprenant un support photographique, une couche sensible aux radiations sur au moins une face du support et une couche insoluble dans leau, conductrice de l'électricité et adhérente, adjacente au support sur au moins l'une des faces de celui-ci, caractérisé en ce que la couche adjacente au suppot comprend une composition séchée conforme à l'une des revendications 1—5.

10. Produit comprenant un support avec, sur ce support, une couche insoluble dans l'eau, conductrice de l'électricité, et adhérente, cette couche comprenant un liant hydrophile, un agent de conductivité et un tannant pour le liant hydrophile, caractérisé en ce que l'agent de conductivité est un sel soluble dans l'eau d'un ester de cellulose et d'un acide polycarboxylique ayant au moins 8 groupes acyle par motif de cellulose en $C_{24}$, dans lequel une majorité au moins de ces groupes acyle sont des groupes acyle d'acide polycarboxylique aliphatique ayant de 3 à 6 atomes de carbone.

11. Produit comprenant un support photographique avec, sur ce support, une couche hydrophile adhérant au support par le moyen d'une sous-couche insoluble dans l'eau et conductrice de l'électricité qui comprend un liant hydrophile, un agent de conductivité et un tannant pour le liant hydrophile, caractérisé en ce que l'agent de conductivité est un sel soluble dans l'eau d'un ester de cellulose et d'un acide polycarboxylique ayant au moins 8 groupes acyle par motif de cellulose en $C_{24}$, dans lequel au moins une majorité de ces groupes acyle sont des groupes acyle d'acide polycarboxylique aliphatique ayant de 3 à 6 atomes de carbone.

12. Produit comprenant un support photographique, une couche sensible aux radiations sur au moins une des faces du support et une couche insoluble dans l'eau et conductrice de l'électricité adjacente au support sur au moins une des faces du support comprenant un liant hydrophile, un agent de conductivité et un tannant pour le liant hydrophile, caractérisé en ce que l'agent de conductivité est un sel soluble dans l'eau d'un ester de cellulose et d'un acide polycarboxylique ayant au moins 8 groupes acyle par motif de cellulose en $C_{24}$ et dans lequel au moins une majorité des groupes acyle sont des groupes acyle d'acide polycarboxylique aliphatique ayant de 3 à 6 atomes de carbone.

13. Utilisation de la combinaison

a) d'un liant hydrophile,

b) du sel soluble dans l'eau d'un ester de cellulosee et d'un acide polycarboxylique ayant au moins 8 groupes acyle par motif de cellulose en $C_{24}$ et dans lequel au moins une majorité des groupes acyle sont des groupes acyle d'acide polycarboxylique aliphatique ayant de 3 à 6 atomes de carbone,

c) un tannant pour le liant hydrophile,

dans un produit conforme à l'une des revendications 6—12.